# EUROPÄISCHE PATENTSCHRIFT

(11) **EP 4 018 100 B1**
(45) Veröffentlichungstag und Bekanntmachung des Hinweises auf die Patenterteilung: **09.08.2023**
(21) Anmeldenummer: 20824148.9
(22) Anmeldetag: 07.12.2020
(51) Int. Cl.: F16B 12/24

(54) **VERBINDUNGSBESCHLAG**
CONNECTION FITTING
FERRURE DE CONNECTION

(30) Priorität: 09.12.2019 DE 202019106842 U
(43) Veröffentlichungstag der Anmeldung: 29.06.2022
(73) Patentinhaber: Häfele Berlin GmbH & Co KG, 12307 Berlin (DE)
(72) Erfinder: BIRKNER, Robert, 12524 Berlin (DE)
(74) Vertreter: Kohler Schmid Möbus Patentanwälte
(86) Internationale Anmeldenummer: PCT/EP2020/084898
(87) Internationale Veröffentlichungsnummer: WO 2021/116023

(56) Entgegenhaltungen:
- WO-A1-2018/020097
- DE-A1- 19 830 740
- DE-U1- 20 312 613
- DE-U1- 29 507 834

## Beschreibung

Die Erfindung betrifft einen Verbindungsbeschlag zur Verbindung zweier Teile, insbesondere zweier Möbelplatten aus Span-, MDF- oder holzähnlichen Materialien, gemäß Oberbegriff von Patentanspruch 1. Die Erfindung betrifft weiter eine zugehörige Möbelanordnung mit einem solchen Verbindungsbeschlag.

Ein derartiger Verbindungsbeschlag ist beispielsweise durch DE 198 30 740 A1 bekannt geworden.

DE 198 30 740 A1 dient zur Relingbefestigung für Schubladen und umfasst einen in der Frontblende der Schublade angeordneten Spreizdübel und einen in den Dübel einführbaren Befestigungsbeschlag, der mit einem Relingrohr verbunden ist. Der Befestigungsbeschlag weist ein Kopfteil mit Spreizkopf auf, welcher in den Spreizdübel einführbar ist. Am Kopfteil bzw. Spreizkopf sind Führungen und/oder Rastungen vorgesehen, die mit zugeordneten Nuten bzw. Rastöffnungen des Spreizdübels zusammenwirken. Nach vollständigem Einschieben des Spreizkopfs wird durch Schwenken des Befestigungsbeschlags ein Spreizen des Spreizdübels bewirkt, wodurch die Führungen bzw. Rastungen in entsprechende Sperrstellungen gelangen, so dass der Befestigungsbeschlag sicher im Spreizdübel gehalten wird und ein Herausziehen des Spreizkopfs nicht mehr möglich ist.

Aus DE 203 12 613 U1 ist ein Anzugsbolzen für einen Beschlag zur lösbaren Verbindung zweier Möbelteile bekannt. Der Anzugsbolzen weist einen in einer ersten Bohrung des ersten Möbelteils anzuordnenden Schaft auf, der mindestens eine sich im Wesentlichen über den halben Umfang des Schafts erstreckende Rippe aufweist.

Aus DE 295 07 834 U1 ist die Befestigung einer hohlen Relingstange einer Schubladen-Reling an der Frontblende einer Schublade bekannt. Die Frontblende weist im Befestigungsbereich der Relingstange eine in ihrer ins Schubladeninnere weisenden Fläche offen mündende, als Sackbohrung ausgebildete Befestigungsbohrung auf. In die frontblendenzugewandte Stirnseite der Relingstange ist ein Gewindeschaft eines Befestigungsbeschlags eingeschraubt, der einen am Gewindeschaft angesetzten, in die Befestigungsbohrung einführbaren, gegenüber dem Gewindeschaft im Durchmesser vergrößerten Befestigungskopf aufweist. Der Befestigungskopf verjüngt sich von seinem relingstangenseitigen Ende aus in Richtung auf sein freies Ende derart konisch, dass die obere Mantellinie des durch den Befestigungskopf gelegten senkrechten Mittelschnitt vom relingstangenseitigen Ende aus über den größten Teil seiner Länge parallel zur oberen Begrenzungslinie der Relingstange und die untere Mantellinie vom freien Ende des Befestigungskopfs aus über den größten Teil seiner Länge schräg in Abwärtsrichtung verläuft. Im Bereich des freien Endes des Befestigungskopfs ist ein radial nach oben vorspringender, schneidenartig zugeschärfter Vorsprung vorgesehen, dessen Schneide sich in Umfangsrichtung erstreckt

WO 2018/020097 A1 offenbart einen Möbelkorpus, der aus Platten gebildet ist, welche mittels einer Anordnung aus Nut und Feder zusammengesetzt sind.

In der DE 20 2018 106 278 U1 wird ein Verbindungsbolzen beschrieben, der mit seinem Bolzenschaft in dem ersten Teil verankert wird. Dann wird der Bolzenkopf mit seinem schneidenförmigen Vorsprung in eine Bohrung des zweiten Teils eingeschwenkt, wodurch der Vorsprung in die Bohrungswandung des zweiten Teils dringt und der Verbindungsbolzen in der Bohrung verankert wird.

Der vorliegenden Erfindung liegt die Aufgabe zugrunde, einen Verbindungsbeschlag der eingangs genannten Art dahingehend weiterzubilden, dass die Verbindungswirkung verbessert wird.

Die Aufgabe wird erfindungsgemäß durch einen Verbindungsbeschlag mit den Merkmalen von Patentanspruch 1 gelöst.

Weitere Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine perspektivische Ansicht des erfindungsgemäßen Verbindungsbeschlags mit einem Verbindungsbolzen und mit einer Muffe;
- Fig. 2: eine andere perspektivische Ansicht des Verbindungsbolzens;
- Fig. 3: eine Seitenansicht der Muffe;
- Fign. 4a-4d: die Montage des erfindungsgemäßen Verbindungsbeschlags an einer Möbelwand; und
- Fign. 5a, 5b: einen Schnitt durch den in Fig. 4d gezeigten, montierten Verbindungsbeschlag mit einer schmalen Muffe (Fig. 5a) und mit einer breiten Muffe (Fig. 5b).

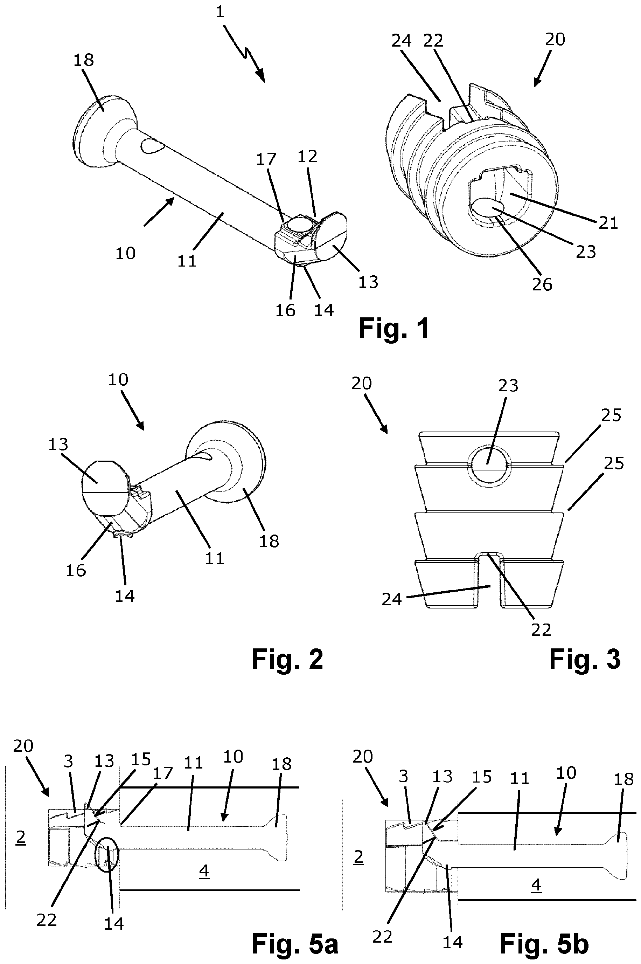

Der in Fig. 1 gezeigte Verbindungsbeschlag 1 dient zum Verbinden zweier Bauteile, insbesondere zweier Möbelplatten aus Pressspan, MDF, Holz oder ähnlichem, und umfasst einen Verbindungsbolzen **10** aus Metall und eine Kunststoff-Muffe **20.**

Der Verbindungsbolzen 10 weist einen zylinderförmigen Bolzenschaft **11** und endseitig einen Bolzenkopf **12** mit einem einen radial nach außen vorstehenden, z.B. krallen- oder schneidenförmigen Bolzenvorsprung **13** auf. Wie in Fig. 2 gezeigt, weist der Bolzenkopf 12 zwischen Bolzenschaft 11 und Bolzenvorsprung 13 auf der dem Bolzenvorsprung 13 gegenüberliegenden Seite einen Rastvorsprung **14** auf, der bevorzugt konvex, insbesondere kalotten- oder halbkugelförmig ausgebildet ist. Die dem Bolzenschaft 11 zugewandte Rückseite des Bolzenvorsprungs 13 ist als Schrägfläche **15** ausgebildet, und die dem Bolzenvorsprung 13 gegenüberliegende Bolzenseite **16** ist abgeschrägt. Auf der Seite des Bolzenvorsprungs 13 geht der Bolzenschaft 11 über eine radial nach außen gerichtete Stufe **17** in den Bolzenkopf 12 über. An seinem anderen Ende weist der Verbindungsbolzen 10 ebenfalls einen hier halbkugelförmigen Bolzenkopf **18** auf.

Die Muffe 20 weist eine vorderseitige Muffenöffnung **21** und im Innern der Muffe 20 sowohl eine in Richtung fort von der Muffenöffnung 21 gerichtete, hier schräge Muffenquerfläche **22** als auch eine zwischen Muffenöffnung 21 und Muffenquerfläche 22 auf der der Muffenquerfläche 22 gegenüberliegenden Seite angeordnete Rastaussparung **23** auf. Die Rastaussparung 23 kann durch eine Rastmulde oder, wie im Ausführungsbeispiel gezeigt, durch eine Queröffnung gebildet sein. Die Muffenquerfläche 22 bildet die Wand einer mantelseitig offenen, seitlichen Muffenöffnung **24,** die wie gezeigt z.B. als ein rückseitig offener Schlitz ausgeführt sein kann. An ihrer Außenseite ist die Muffe 20 mit mehreren widerhakenähnliche Rippen **25** versehen.

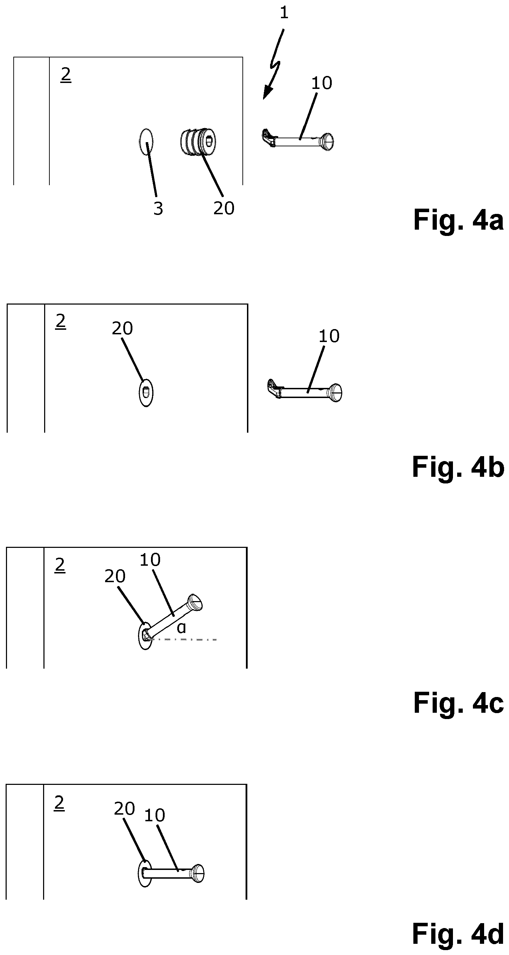

In den **Fign. 4a-4d** ist die Montage des Verbindungsbeschlags 1 an einer Möbelplatte **2** gezeigt.

Zunächst wird die Muffe 20, mit der Muffenöffnung 24 nach oben, in eine Bohrung **3** in der Möbelplatte 2 eingepresst (Fign. 4a, 4b), wobei sich die Rippen 25 in die Bohrungswand eingraben. Bevorzugt ist die Muffe 20 noch zusätzlich in der Bohrung 3 verleimt.

Dann wird der Bolzenkopf 12 des unter einem Winkel **α** (hier lediglich beispielhaft ca. 45°) angekippten Verbindungsbolzens 10 vom Bediener werkzeuglos in die Muffenöffnung 21 eingeführt (Fig. 4c), bis die abgeschrägte Bolzenseite 16 auf dem Öffnungsrand **26** der Muffenöffnung 21 aufliegt.

Abschließend wird der Verbindungsbolzen 10 um den Winkel α nach unten in seine zur Möbelplatte2 rechtwinklige Endlage gedrückt bzw. verkippt (Fig. 4d), wodurch einerseits der Bolzenvorsprung 13 mit seiner Schrägfläche 15 die schräge Querfläche 22 hintergreift und andererseits die abgeschrägte Bolzenseite 16 auf dem Öffnungsrand 26 weiter in die Muffe 20 hineingleitet. Durch die Kippbewegung wird der Bolzenkopf 12 weiter in die Muffe 20 hineingezogen, bis der Rastvorsprung 14 in der Rastaussparung 23 verrastet ist **(****Fign. 5a**, **5b**). Der Bolzenschaft 11 verläuft dann koaxial zur Muffenachse und somit rechtwinklig zur Möbelplatte 2, und die Stufe 17 des Verbindungsbolzens 10 schließt bündig mit der Muffenstirnseite ab. Über den anderen Bolzenkopf 18 kann eine zweite Möbelplatte **4** an der ersten Möbelplatte 2 befestigt werden. Der Bolzenkopf 12 an seinem Übergang zum Bolzenschaft 11 und die Muffenöffnung 21 weisen komplementäre Querschnitte auf, so dass der Verbindungsbolzen 10 spaltfrei in der Muffenöffnung 21 aufgenommen ist.

Fig. 5a zeigt den montierten Verbindungsbeschlag 1 mit einer so schmalen Muffe 20, dass der Bolzenvorsprung 13 aus der Muffenöffnung 24 nach außen übersteht und mit seinem krallen- oder schneidenförmigen Ende in die Wandung der Bohrung 3 eindringt. Dies erhöht die Auszugswerte des Verbindungsbolzens 10. Fig. 5a zeigt den montierten Verbindungsbeschlag 1 mit einer so breiten Muffe 20, dass der Bolzenvorsprung 13 nicht aus der Muffenöffnung 24 nach außen übersteht.

## Patentansprüche

1. Verbindungsbeschlag (1) aufweisend:
- einen Verbindungsbolzen (10) mit einem Bolzenschaft (11) und mit einem Bolzenkopf (12), der einen radial nach außen vorstehenden Bolzenvorsprung (13) und zwischen Bolzenschaft (11) und Bolzenvorsprung (13) auf der dem Bolzenvorsprung (13) gegenüberliegenden Seite einen Rastvorsprung (14) aufweist, wobei die dem Bolzenschaft (11) zugewandte Rückseite des Bolzenvorsprungs (13) als eine **in Bezug auf die Längsachse des Bolzenschafts (11) schräg verlaufende** Schrägfläche (15) ausgebildet ist, und
- eine Muffe (20), die eine **vorderseitige** Muffenöffnung (21) und im Innern der Muffe (20) sowohl eine in Richtung fort von der Muffenöffnung (21) gerichtete, schräge Muffenquerfläche (22) als auch eine zwischen Muffenöffnung (21) und Muffenquerfläche (22) auf der der schrägen Muffenquerfläche (22) gegenüberliegenden Seite angeordnete Rastaussparung (23) aufweist, **wobei die Muffenquerfläche (22) die Wand einer mantelseitig offenen, seitlichen Muffenöffnung (24) bildet,**
wobei im montierten Zustand des Verbindungsbeschlags (1) der Bolzenkopf (12) in die Muffenöffnung (21) eingeführt ist und sowohl der Bolzenvorsprung (13) mit seiner Schrägfläche (15) die schräge Muffenquerfläche (22) in Einführrichtung des Verbindungsbolzens (10) hintergreift als auch der Rastvorsprung (14) in die Rastaussparung (23) eingerastet ist.

2. Verbindungsbeschlag nach Anspruch 1, **dadurch gekennzeichnet, dass** die Muffenöffnung (21) und der Bolzenkopf (12) am Übergang zum Bolzenschaft (11) komplementäre Querschnitte aufweisen.

3. Verbindungsbeschlag nach Anspruch 1 oder 2, **dadurch gekennzeichnet, dass** im montierten Zustand des Verbindungsbeschlags (1) der Bolzenvorsprung (13) radial nach außen über die Muffe (20) vorsteht.

4. Verbindungsbeschlag nach einem der vorhergehenden Ansprüche, **dadurch gekennzeichnet, dass** auf der Seite des Bolzenvorsprungs (13) der Bolzenschaft (11) über eine radial nach außen gerichtete Stufe (17) in den Bolzenkopf (12) übergeht und im montierten Zustand des Verbindungsbeschlags (1) die Stufe (17) bündig mit der Muffenstirnseite abschließt.

5. Verbindungsbeschlag nach einem der vorhergehenden Ansprüche, **dadurch gekennzeichnet, dass** die Muffe (20) eine sich in radialer Richtung nach außen an die Muffenquerfläche (22) anschließende Öffnung (24) aufweist.

6. Verbindungsbeschlag nach einem der vorhergehenden Ansprüche, **dadurch gekennzeichnet, dass** der Rastvorsprung (14) konvex, insbesondere kalotten- oder halbkugelförmig, ausgebildet ist.

7. Verbindungsbeschlag nach einem der vorhergehenden Ansprüche, **dadurch gekennzeichnet, dass** die dem Bolzenvorsprung (13) gegenüberliegende Bolzenseite (16) abgeschrägt ist.

8. Verbindungsbeschlag nach einem der vorhergehenden Ansprüche, **dadurch gekennzeichnet, dass** auf der Seite des Bolzenvorsprungs (13) der Bolzenschaft (11) über eine radial nach außen gerichtete Stufe (17) in den Bolzenkopf (12) übergeht.

9. Möbelanordnung mit zwei Möbelplatten (2, 4) und mit einem Verbindungsbeschlag (1) nach einem der vorhergehenden Ansprüche, wobei die Muffe (20) in einer Bohrung (3) der einen Möbelplatte (2) und der Verbindungsbolzen (10) an der anderen Möbelplatte (4) abgestützt ist.

10. Möbelanordnung nach Anspruch 9, **dadurch gekennzeichnet, dass** der Bolzenvorsprung (13) durch die Muffenöffnung (24) hindurch in die Wandung der Bohrung (3) eingreift.

## Claims

1. A connection fitting (1) comprising:
- a connecting bolt (10) having a bolt shaft (11) and a bolt head (12) which has a radially outwardly protruding bolt projection (13) and a latching projection (14) between the bolt shaft (11) and bolt projection (13) at the side opposite the bolt projection (13), wherein the rear side of the bolt projection (13) facing the bolt shaft (11) is constructed as an inclined face (15) which is inclined in relation to the longitudinal axis of the bolt shaft (11), and
- a sleeve (20) which has a frontal sleeve opening (21) and inside the sleeve (20) both an inclined sleeve transverse face (22) which is directed in the direction away from the sleeve opening (21) and a latching recess (23) which is arranged between the sleeve opening (21) and sleeve transverse face (22) at the side opposite the inclined sleeve transverse face (22), wherein the sleeve transverse face (22) forms the wall of a jacket-sided open, lateral sleeve opening (24),
wherein in the assembled state of the connection fitting (1) the bolt head (12) is introduced into the sleeve opening (21) and both the bolt projection (13) engages with the inclined face (15) thereof behind the inclined sleeve transverse face (22) in the introduction direction of the connecting bolt (10) and the latching projection (14) is engaged in the latching recess (23).

2. The connection fitting as claimed in claim 1, **characterized in that** the sleeve opening (21) and the bolt head (12) have complementary cross sections at the transition to the bolt shaft (11).

3. The connection fitting as claimed in claim 1 or 2, **characterized in that** in the assembled state of the connection fitting (1) the bolt projection (13) protrudes radially outward over the sleeve (20).

4. The connection fitting as claimed in one of the preceding claims, **characterized in that** at the side of the bolt projection (13) the bolt shaft (11) transitions via a radially outwardly directed step (17) into the bolt head (12) and in the assembled state of the connection fitting (1) the step (17) terminates flush with the sleeve end face.

5. The connection fitting as claimed in one of the preceding claims, **characterized in that** the sleeve (20) has an opening (24) which adjoins the sleeve transverse face (22) outwardly in a radial direction.

6. The connection fitting as claimed in one of the preceding claims, **characterized in that** the latching projection (14) is constructed in a convex, in particular dome-like or hemi-spherical manner.

7. The connection fitting as claimed in one of the preceding claims, **characterized in that** the bolt side (16) opposite the bolt projection (13) is slanted.

8. The connection fitting as claimed in one of the preceding claims, **characterized in that** at the side of the bolt projection (13) the bolt shaft (11) transitions via a radially outwardly directed step (17) into the bolt head (12).

9. A furniture arrangement comprising two furniture panels (2, 4) and a connection fitting (1) as claimed in one of the preceding claims, wherein the sleeve (20) is supported in a bore (3) of one furniture panel (2) and the connecting bolt (10) is supported on the other furniture panel (4).

10. The furniture arrangement as claimed in claim 9, **characterized in that** the bolt projection (13) engages through the sleeve opening (24) into the wall of the bore (3).

## Revendications

1. Ferrure d'assemblage (1) présentant :
- un cheville d'assemblage (10) avec une tige de cheville (11) et avec une tête de cheville (12), qui présente une saillie de cheville (13) faisant saillie radialement vers l'extérieur et une saillie d'encliquetage (14) sur le côté opposé à la saillie de cheville (13) entre la tige de cheville (11) et la saillie de cheville (13), la face arrière, tournée vers la tige de cheville (11), de la saillie de cheville (13) étant réalisée sous la forme d'une surface inclinée (15) s'étendant de manière inclinée par rapport à l'axe longitudinal de la tige de cheville (11), et
- un manchon (20) qui présente une ouverture de manchon avant (21) et, à l'intérieur du manchon (20), à la fois une surface transversale de manchon (22) inclinée dirigée vers l'extérieur de l'ouverture de manchon (21) et un évidement d'encliquetage (23) agencé entre l'ouverture de manchon (21) et la surface transversale de manchon (22) sur le côté opposé à la surface transversale de manchon (22) inclinée, la surface transversale de manchon (22) formant la paroi d'une ouverture de manchon (24) latérale ouverte du côté périphérique,
la tête de cheville (12) étant introduite dans l'ouverture de manchon (21) lorsque la ferrure d'assemblage (1) se trouve à l'état monté, et la surface inclinée (15) de la saillie de cheville (13) venant en prise par l'arrière avec la surface transversale de manchon (22) inclinée, dans la direction d'introduction de la cheville d'assemblage (10), et la saillie d'encliquetage (14) étant également encliquetée dans l'évidement d'encliquetage (23).

2. Ferrure d'assemblage selon la revendication 1, **caractérisée en ce que** l'ouverture de manchon (21) et la tête de cheville (12) présentent des sections transversales complémentaires au niveau de la transition vers la tige de cheville (11).

3. Ferrure d'assemblage selon la revendication 1 ou 2, **caractérisée en ce que** la saillie de cheville (13) fait saillie radialement vers l'extérieur au delà du manchon (20) lorsque la ferrure d'assemblage (1) se trouve à l'état monté.

4. Ferrure d'assemblage selon l'une quelconque des revendications précédentes, **caractérisée en ce que** la tige de cheville (11) se raccorde à la tête de cheville (12) du côté de la saillie de cheville (13) par l'intermédiaire d'un gradin (17) dirigé radialement vers l'extérieur et le gradin (17) arrive au ras de la face frontale de manchon lorsque la ferrure d'assemblage (1) se trouve à l'état monté.

5. Ferrure d'assemblage selon l'une quelconque des revendications précédentes, **caractérisée en ce que** le manchon (20) présente une ouverture (24) se raccordant à la surface transversale de manchon (22) dans la direction radiale vers l'extérieur.

6. Ferrure d'assemblage selon l'une quelconque des revendications précédentes, **caractérisée en ce que** la saillie d'encliquetage (14) est convexe, notamment en forme de calotte ou d'hémisphère.

7. Ferrure d'assemblage selon l'une quelconque des revendications précédentes, **caractérisée en ce que** le côté de cheville (16) opposé à la saillie de cheville (13) est biseauté.

8. Ferrure d'assemblage selon l'une quelconque des revendications précédentes, **caractérisée en ce que** la tige de cheville (11) se raccorde à la tête de cheville (12) du côté de la saillie de cheville (13) par l'intermédiaire d'un gradin (17) dirigé radialement vers l'extérieur.

9. Agencement de meuble comprenant deux panneaux de meuble (2, 4) et une ferrure d'assemblage (1) selon l'une quelconque des revendications précédentes, le manchon (20) étant supporté dans un alésage (3) du panneau de meuble (2) et la cheville d'assemblage (10) étant supporté au niveau de l'autre panneau de meuble (4).

10. Agencement de meuble selon la revendication 9, **caractérisé en ce que** la saillie de cheville (13) vient en prise dans la paroi de l'alésage (3) en traversant l'ouverture de manchon (24).
